# EUROPEAN PATENT APPLICATION

(11) **EP 1 267 587 A2**
(43) Date of publication of application: **18.12.2002**
(21) Application number: 01118754.9
(22) Date of filing: 07.08.2001
(51) Int. Cl.: H04Q 11/00

(54) **Communications network**

(30) Priority: 12.06.2001 US 880714
(71) Applicant: Redfern Broadband Networks Inc., Wilmington, County of Newcastle, Delaware, 19801 (US)
(72) Inventor: Halgren, Ross, Collaroy Plateau, New South Wales 2097 (AU); Lauder, Richard, Maroubra, New South Wales 2035 (AU)
(74) Representative: VOSSIUS & PARTNER

(57) **Abstract**

A network node for use in a WDM communications network, the network node comprising a first network interface unit arranged, in use, to demultiplex an incoming WDM optical signal and to convert the incoming WDM optical signal into a plurality of electrical channel signals, a regeneration unit for regenerating the electrical channel signals utilising at least 2R regeneration, a second network interface unit arranged, in use, to convert and multiplex at least one of the electrical channel signals into an outgoing WDM optical signal, and a secondary interface unit arranged, in use, to convert at least one of the electrical channel signals into an optical signal and to drop the optical signal at the network node.

## Description

The present invention relates broadly to a network node for use in a Wavelength Division Multiplexing (WDM) communications network, to a WDM communications network incorporating such a network node and to a method of transmitting communication data in a WDM communications network.

In optical WDM communications networks it is known to utilise non-regenerative reconfigurable optical add/drop multiplexers (OADMs) at the network nodes of the communications network. However, such network designs have the disadvantage that they suffer from high optical losses at the network nodes due to the passive optical multiplexing and switching devices utilised in the reconfigurable OADMs. The high optical losses result in design constraints in as much as either fewer network nodes can be implemented in a network, or expensive optical amplifiers must be incorporated in the network so that more network nodes can be added in series.

On the other hand, in communications networks which are based on regenerative synchronised optical network (SONET) multiplexers, optical losses are reduced as a result of utilising electrical time domain multiplexing (TDM) multiplexer components and electrical cross connect components instead of OADMs. However, such communications networks have the disadvantage of a lower capacity and scalability when compared with WDM communications networks.

There is thus a need to provide a communications network which preferably provides the regenerative benefits of SONET/TDM based communications networks as well as the capacity, scalability, and flexibility of a WDM based communications network.

In accordance with a first aspect of the present invention there is provided a network node for use in a WDM communications network, the network node comprising a first network interface unit arranged, in use, to demultiplex an incoming WDM optical signal and to convert the incoming WDM optical signal into a plurality of electrical channel signals, a regeneration unit for regenerating the electrical channel signals utilising at least 2R regeneration, a second network interface unit arranged, in use, to convert and multiplex at least one of the electrical channel signals into an outgoing WDM optical signal, and a secondary interface unit arranged, in use, to convert at least one of the electrical channel signals into an optical signal and to drop the optical signal at the network node.

In one embodiment, the secondary interface unit is further arranged, in use, to receive at least one single wavelength optical signal and to convert it into a corresponding electrical signal, and the second network interface unit is further arranged to convert and multiplex the corresponding electrical signal into the outgoing WDM optical signal. The secondary interface unit may preferably be arranged, in use, to regenerate the corresponding electrical signal utilising at least 2R regeneration.

The network node may further comprise an electrical switching unit arranged, in use, to facilitate that any electrical channel signal can selectively be converted and dropped at the network node via the secondary interface unit or converted and multiplexed into the outgoing WDM signal via the second network interface unit.

The first network interface unit may comprise at least one trunk interface card for converting respective channels of the incoming WDM optical signal into the electrical channel signals.

The second network interface unit may comprise at least one trunk interface card for converting the respective electrical channel signals into optical channel signals for multiplexing into the outgoing WDM optical signal.

The secondary interface unit may comprise at least one secondary interface card for converting respective electrical channel signals into optical signals for dropping at the network node and for converting respective received single wavelength signals for multiplexing into the outgoing optical WDM signal.

The switching unit may be arranged in a manner such that, in use, any one of the trunk or secondary interface cards can be selectively connected to any one of the trunk or secondary interface cards. Accordingly, wavelengths may be switched at the network node.

The regeneration unit may be arranged to regenerate the electrical channel signals utilising 3R regeneration. The regenerating unit in such an embodiment may comprise a programmable Clock Data Recovery (CDR) component for each electrical channel signal. Accordingly, different communication protocols can be utilised on different channels.

The first and second network interface units are each preferably capable, in use, of functioning as the other network interface unit, whereby the network node is west-east/east-west traffic transparent. The first and second network interface units may each comprise a passive WDM multiplexing/demultiplexing component. The WDM components are preferably arranged as coarse WDM (CWDM) components.

The switching unit may be incorporated in the first or second network interface units. Preferably, a redundant switching unit is incorporated in the other network interface unit for failure protection.

In a preferred embodiment, the regeneration unit is implemented as a very large scale integration (VLSI) structure.

In accordance with a second aspect of the present invention there is provided a network node for use in a WDM communications network, the network node comprising a first network interface unit arranged, in use, to demultiplex an incoming WDM optical signal and to convert the incoming WDM optical signal into a plurality of electrical channel signals, a regeneration unit for regenerating the electrical channel signals utilising at least 2R regeneration, a second network interface unit arranged, in use, to convert and multiplex at least one of the electrical channel signals into an outgoing WDM optical signal, and a secondary interface unit arranged, in use, to receive at least one single wavelength optical signal and to convert it into a corresponding electrical signal, and the second network interface unit is further arranged to convert and multiplex the corresponding electrical signal into the outgoing WDM optical signal.

In accordance with a third aspect of the present invention there is provided a WDM network incorporating at least one network node as defined in the first or second aspects of the present invention.

In accordance with a fourth aspect of the present invention there is provided a method of transmitting communication data in a WDM communications network, the method comprising the steps of, at a network node of the WDM communications network, demultiplexing an incoming WDM optical signal and converting the incoming WDM optical signal into a plurality of electrical channel signals, regenerating the electrical channel signals utilising at least 2R regeneration, converting and multiplexing at least one of the electrical channel signals into an outgoing WDM optical signal, and converting at least one of the electrical channel signals into an optical signal and dropping the optical signal at the network node.

In accordance with a fifth aspect of the present invention there is provided a method of transmitting communication data in a WDM communications network, the method comprising the steps of, at a network node of the WDM communications network, demultiplexing an incoming WDM optical signal and converting the incoming WDM optical signal into a plurality of electrical channel signals, regenerating the electrical channel signals utilising at least 2R regeneration, converting and multiplexing at least one of the electrical channel signals into an outgoing WDM optical signal, and receiving at least one single wavelength optical signal, converting it into a corresponding electrical signal, and converting and multiplexing the corresponding electrical signal into the outgoing WDM optical signal.

Preferred forms of the present invention will now be described, by way of example only, with reference to the accompanying drawings.
Figure 1 shows a schematic diagram of a network node structure embodying the present invention.
Figure 2 shows a schematic diagram of a detail of the network node structure of Figure 1.
Figure 3 and 4 show an example circuit diagram of the detail shown in Figure 2.
Figure 5 is a schematic drawing illustrating an optical communications network embodying the present invention.

The preferred embodiments described provide a network node structure which enables the utilisation of the regenerative benefits of SONET/TDM based communications networks as well as the capacity, scalability, and flexibility of a WDM based communications network.

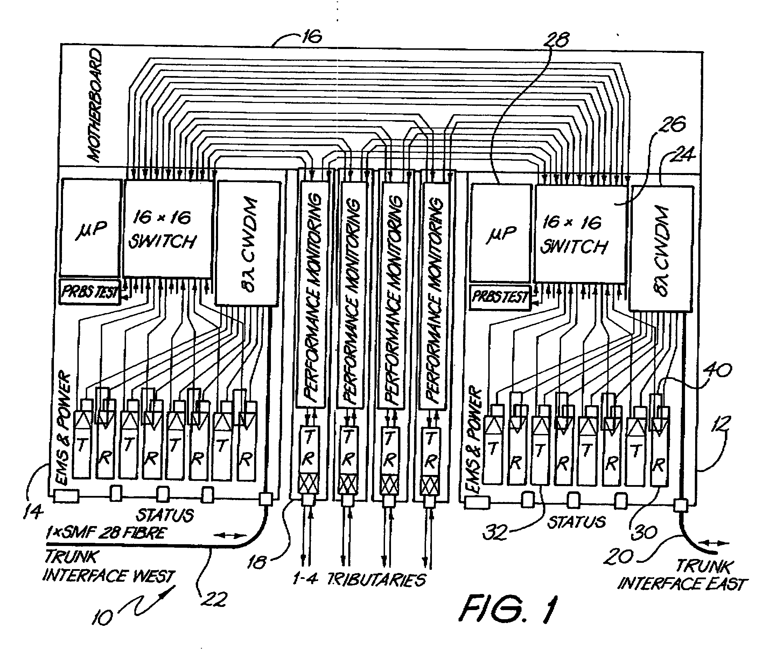

Figure 1 shows a schematic diagram of a network node structure 10 embodying the present invention. The node structure comprises two network interface modules 12, 14, an electrical connection motherboard 16 and a plurality of tributary interface modules e.g. 18.

The network interface modules 12, 14 are connected to an optical network east trunk 20 and an optical network west trunk 22 respectively, of an optical network (not shown) to which the network node structure 10 is connected in-line.

Each of the network interface modules 12, 14 comprises the following components:
- a passive CWDM component 24, in the exemplary embodiment a 8 wavelength component;
- an electrical switch component, in the exemplary embodiment a 16 x 16 switch 26;
- a microprocessor 28;
- a plurality of receiver trunk interface cards e.g. 30; and
- a plurality of transmitter trunk interface cards e.g. 32, and
- a plurality of electrical regeneration unit e.g. 40 associated with each receiver trunk interface card e.g. 30.

In the exemplary embodiment, each regeneration unit e.g. 40 performs 3R regeneration on the electrical channels signal converted from a corresponding optical WDM channel signal received at the respective receiver trunk interface card e.g. 30. Accordingly, the network node structure 10 can provide signal regeneration capability for each channel signal combined with an electrical switching capability for add/drop functionality, i.e. avoiding high optical losses incurred in OADMs.

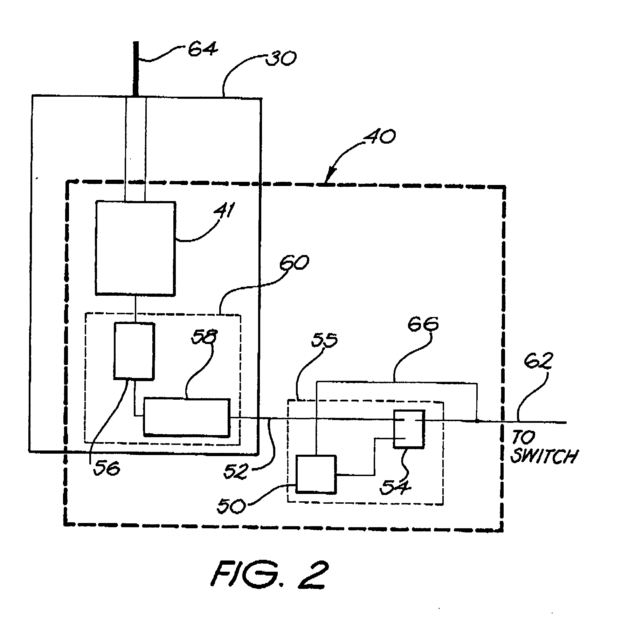

Details of the receiver trunk interface cards e.g. 30 and regeneration unit e.g. 40 of the exemplary embodiment will now be described with reference to Figure 2.

In Figure 2, the regeneration component 40 comprises a linear optical receiver 41 of the receiver trunk interface card 30. The linear optical receiver comprises a transimpendence amplifier (not shown) i.e. 1R regeneration is performed on the electrical receiver signal within the linear optical receiver 41.

The regeneration unit 40 further comprises an AC coupler 56 and a binary detector component 58 formed on the receiver trunk interface card 30. Together the AC coupler 56 and the binary detector 58 form a 2R regeneration section 60 of the regeneration unit 40.

The regeneration unit 40 further comprises a programmable phase lock loop (PLL) 50 tapped to an electrical input line 52 and connected to a flip flop 54. The programmable PLL 50 and the flip flop 54 form a programmable clock data recovery (CDR) section 55 of the regeneration unit 40.

It will be appreciated by a person skilled in the art that at the output 62 of the CDR section 55 the electrical receiver signal (converted from the received optical CWDM channel signal over optical fibre input 64) is 3R regenerated at the network node structure. It is noted that in the exemplary embodiment shown in Figure 2, a 2R bypass connection 66 is provided, to bypass the CDR section 55 if desired.

Returning now to Figure 1, each of the tributary interface modules e.g. 18 comprises a tributary transceiver interface card 34 and an electrical performance monitoring unit 36. In the exemplary embodiment, a 3R regeneration unit (not shown) similar to the one described in relation to the receiver trunk interface cards e.g. 30 with reference to Figure 2 is provided. Accordingly, 3R regeneration is conducted on each received electrical signal converted from received optical input signals prior to the 16 x 16 switch 26.

As can be seen from the connectivity provided through the electrical motherboard 16, each of the electrical switches 26 facilitates that any trunk interface card e.g. 30, 32 or tributary interface card e.g. 18 can be connected to any trunk interface card e.g. 30, 32, or tributary interface card e.g. 18. Accordingly, e.g. each wavelength channel signal received at the western network interface module 14, e.g. at receiver trunk interface card 38 can either be dropped at the network node associated with the network node structure 10 via any one of the tributary interface modules e.g. 18, or alternatively can be through connected into the optical network trunk east 20 via the east network interface module 12.

Furthermore, it will also be appreciated by the person skilled in the art that the network node structure 10 is west-east/east-west traffic transparent. Also, due to the utilisation of network interface modules 12, 14 which each incorporate a 16 x 16 switch 26, a redundant switch is readily provided for the purpose of protecting the tributary interface cards e.g. 18 from a single point of failure. The tributary interface cards e.g. 18 are capable of selecting to transmit a signal to either (or both) network interface modules 12, 14 and the associated switches e.g 26. The function of the switches e.g. 26 is to select the wavelength that the optical signal received from the tributary interface cards e.g. 18 will be transmitted on into the optical network.

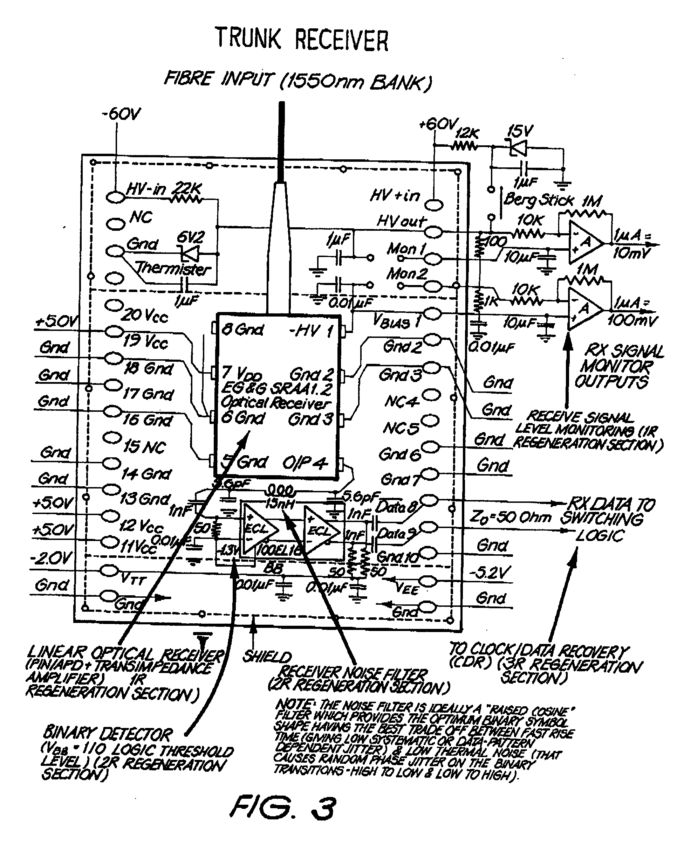

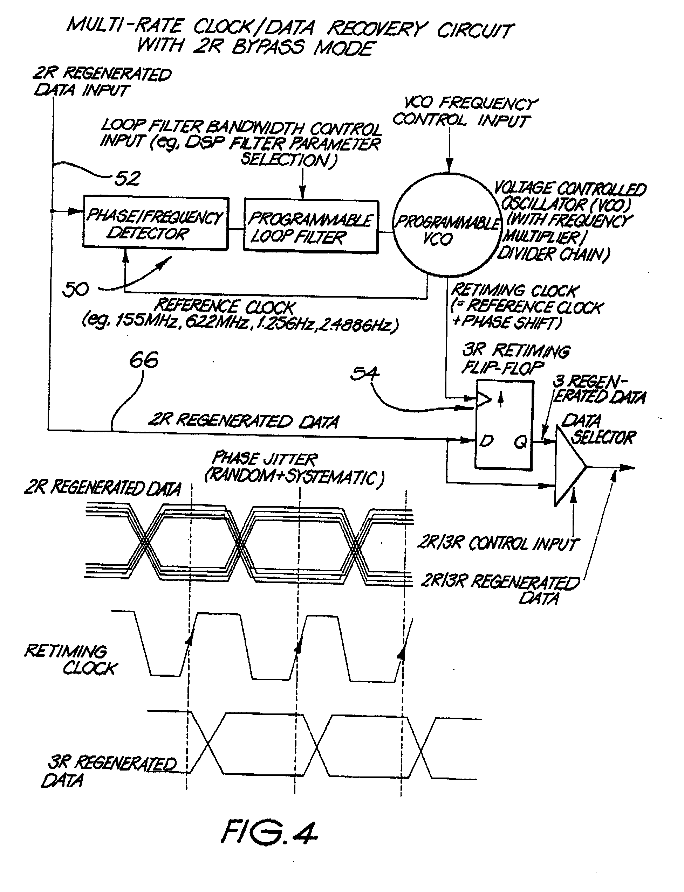

Figures 3 and 4 show a circuit diagram for the example embodiment.

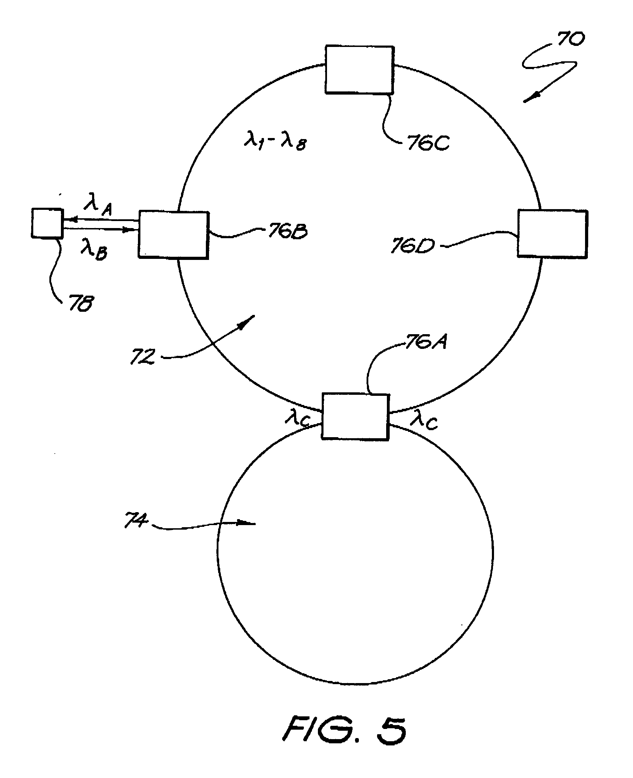

Figure 5 shows an exemplary optical communications network 70 comprising an access ring network 72 and a sub-ring network 74. The access ring network 72 comprises a plurality of network nodes 76, each incorporating a network node structure of the type of network node structure 10 described above with reference to Figures 1 to 4. The sub-network 72 can comprise a single wavelength SONET based network, with one of the 8 available wavelengths in the example embodiment being dropped and re-added at the network node 76A. In the example embodiment, the wavelength utilised in the sub-ring network 74 is denoted λ_{A}. Importantly, this wavelength may be different to any one of the wavelength λ₁-λ₈ and the associated tributary interface card (not shown) is configured accordingly. An example wavelength utilised in the sub-ring network 74 may be 1310nm, whereas the wavelength chosen in the access ring 72 may be:
λ₁=1470nm
λ₂=1490nm
λ₃=1510nm
λ₄=1530nm
λ₅=1550nm
λ₆=1570nm
λ₇=1590nm
λ₈=1610nm

At the other network nodes 76, e.g. at network node 76B, other wavelengths are dropped and added to individual subscriber connections, e.g. at network node 76B. Again, the tributary interface cards (not shown) may add/drop the signals a different wavelengths than the ones used within the access ring network 72, in the examplary embodiment denoted λ_{A} and λ_{B}.

In the exemplary embodiment shown in Figure 5, the access ring network 72 is configured as a CWDM network having eight channels i.e. relatively widely spaced wavelength signals which reduces the likelihood of cross talk between channels, thus enabling less stringent design parameters in the implementation of the network. Furthermore, this also reduces the possibility of adjacent channel cross talk due to temperature related wavelength drift, thus permitting the application of the invention to outside enclosures that are subjected to wide temperature variations.

As a result of utilising electrical regeneration of the CWDM channel signals at each network node 76, no costly optical amplification units need to be provided in a typical access network environment, i.e. typical transmission distance between network nodes of the order of 20km. Thus, the exemplary embodiment can be implemented as a cost effective upgrade of an existing SONET based and/or SONET/TDM based optical network to form the access ring network 72.

At each of the network nodes 76, any of the eight wavelength channels can be dropped or added into the access ring network 72. Due to the west-east/east-west transparency of each of the network nodes 76, communications between individual network nodes may be transmitted along different directions around the access ring network 72 to effect path protection. The wavelength allocation scheme must merely account for the fact that each wavelength can only be utilised once in each direction between the individual network nodes 76 should a single fibre bi-directional connection be used between the nodes 76 as in the example embodiment shown in Figure 5. However, it is noted that due to the selective switching configuration of the network nodes 76 wavelengths may be switched at individual network nodes 76 to maximise the overall wavelength usage between the individual network elements 76 and ultimately in the overall access ring network 72.

It is noted that the present invention may also be implemented with two or more fibre connections between network nodes, in which case the wavelength resources between the network nodes in increased. The wavelength allocation scheme in such embodiments can be expanded accordingly.

One of the applications/advantages of embodiments of the present invention is that the electronic switches support broadcast and multicast transmissions of the same signal over multiple wavelengths. This can have useful applications in entertainment video or data casting implementation. Many optical add/drop solutions do not support this feature, instead, they only support logical point-point connections since the signal is dropped at the destination node and does not continue to the next node.

It will be appreciated by the person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

In the claims that follow and the in the summary of the invention, except where the context requires otherwise due to express language or necessary implication, the word "comprising" is used in the sense of "including", i.e. the features specified may be associated with further features in various embodiments of the invention.

## Claims

1. A network node for use in a WDM communications network, the network node comprising:
- a first network interface unit arranged, in use, to demultiplex an incoming WDM optical signal and to convert the incoming WDM optical signal into a plurality of electrical channel signals,
- a regeneration unit for regenerating the electrical channel signals utilising at least 2R regeneration,
- a second network interface unit arranged, in use, to convert and multiplex at least one of the electrical channel signals into an outgoing WDM optical signal, and
- a secondary interface unit arranged, in use, to convert at least one of the electrical channel signals into an optical signal and to drop the optical signal at the network node.

2. A network node as claimed in claim 1, wherein the secondary interface unit is further arranged, in use, to receive at least one single wavelength optical signal and to convert it into a corresponding electrical signal, and the second network interface unit is further arranged to convert and multiplex the corresponding electrical signal into the outgoing WDM optical signal.

3. A network node as claimed in claim 2, wherein the secondary interface unit is arranged, in use, to regenerate the corresponding electrical signal utilising at least 2R regeneration.

4. A network node as claimed in any one of claims 1 to 3, wherein the network node further comprises an electrical switching unit arranged, in use, to facilitate that any electrical channel signal can selectively be converted and dropped at the network node via the secondary interface unit or converted and multiplexed into the outgoing WDM signal via the second network interface unit.

5. A network node as claimed in any one of the preceding claims, wherein the first network interface unit comprises at least one trunk interface card for converting respective channels of the incoming WDM optical signal into the electrical channel signals.

6. A network node as claimed in any one of the preceding claims, wherein the second network interface unit comprises at least one trunk interface card for converting the respective electrical channel signals into optical channel signals for multiplexing into the outgoing WDM optical signal.

7. A network node as claimed in any one of the preceding claims, wherein the secondary interface unit comprises at least one secondary interface card for converting respective electrical channel signals into optical signals for dropping at the network node and for converting respective received single wavelength signals for multiplexing into the outgoing optical WDM signal.

8. A network node as claimed in claims 5, 6, and 7, wherein the switching unit is arranged in a manner such that, in use, any one of the trunk or secondary interface cards can be selectively connected to any one of the trunk or secondary interface cards.

9. A network node as claimed in any one of the preceding claims, wherein the regeneration unit is arranged to regenerate the electrical channel signals utilising 3R regeneration.

10. A network node as claimed in claim 9, wherein the regenerating unit comprises a programmable Clock Data Recovery (CDR) component for each electrical channel signal.

11. A network node as claimed in any one of the preceding claims, wherein the first and second network interface units are capable, in use, of functioning as the other network interface unit, whereby the network node is west-east/east-west traffic transparent.

12. A network node as claimed in claim 11, wherein the first and second network interface units each comprise a passive WDM multiplexing/demultiplexing component.

13. A network node as claimed in claim 12, wherein the WDM components are arranged as coarse WDM (CWDM) components.

14. A network node as claimed in claim 4, wherein the switching unit is incorporated in one of the first or second network interface units.

15. A network node as claimed in claim 14, wherein a redundant switching unit is incorporated in the other network interface unit for failure protection.

16. A network node as claimed in claim any one of the preceding claims, wherein the regeneration unit is implemented as a very large scale integration (VLSI) structure.

17. A network node for use in a WDM communications network, the network node comprising:
- a first network interface unit arranged, in use, to demultiplex an incoming WDM optical signal and to convert the incoming WDM optical signal into a plurality of electrical channel signals,
- a regeneration unit for regenerating the electrical channel signals utilising at least 2R regeneration,
- a second network interface unit arranged, in use, to convert and multiplex at least one of the electrical channel signals into an outgoing WDM optical signal, and
- a secondary interface unit arranged, in use, to receive at least one single wavelength optical signal and to convert it into a corresponding electrical signal,
and the second network interface unit is further arranged to convert and multiplex the corresponding electrical signal into the outgoing WDM optical signal.

18. A WDM network incorporating at least one network node as defined in any one of claims 1 to 17.

19. A method of transmitting communication data in a WDM communications network, the method comprising the steps of, at a network node of the WDM communications network:
- demultiplexing an incoming WDM optical signal
- converting the incoming WDM optical signal into a plurality of electrical channel signals,
- regenerating the electrical channel signals utilising at least 2R regeneration,
- converting and multiplexing at least one of the electrical channel signals into an outgoing WDM optical signal,
- converting at least one of the electrical channel signals into an optical signal;
- and dropping the optical signal at the network node.

20. A method of transmitting communication data in a WDM communications network, the method comprising the steps of, at a network node of the WDM communications network:
- demultiplexing an incoming WDM optical signal
- converting the incoming WDM optical signal into a plurality of electrical channel signals,
- regenerating the electrical channel signals utilising at least 2R regeneration,
- converting and multiplexing at least one of the electrical channel signals into an outgoing WDM optical signal,
- receiving at least one single wavelength optical signal,
- converting it into a corresponding electrical signal,
- converting and multiplexing the corresponding electrical signal into the outgoing WDM optical signal.
